# EUROPEAN PATENT SPECIFICATION

(11) **EP 2 117 322 B1**
(45) Date of publication and mention of the grant of the patent: **17.10.2018**
(21) Application number: 08712625.6
(22) Date of filing: 21.02.2008
(51) Int. Cl.: A21D 2/18, A21D 8/04, A21D 13/02

(54) **IMPROVED FLOUR BASED DOUGH AND METHOD OF PREPARING SUCH DOUGH**
VERBESSERTER TEIG AUF MEHLBASIS UND VERFAHREN ZUR HERSTELLUNG SOLCH EINES TEIGS
PÂTE À BASE DE FARINE AMÉLIORÉE ET PROCÉDÉ POUR PRÉPARER CETTE PÂTE

(30) Priority: 27.02.2007 EP 07103095
(43) Date of publication of application: 18.11.2009
(73) Proprietor: CSM Bakery Solutions Europe Holding B.V., 1019 GM Amsterdam (NL)
(72) Inventor: SCHARF, Udo, 55413 Weiler (DE); SCHUHMANN, Frank, 55596 Waldböckelheim (DE)
(74) Representative: Nederlandsch Octrooibureau
(86) International application number: PCT/NL2008/050099
(87) International publication number: WO 2008/105658

(56) References cited:
- GB-A- 2 368 512
- GB-A- 2 400 012
- GB-A- 2 431 560
- US-A1- 2006 008 567
- LAURIKAINEN T., HÄRKÖNEN H., AUTIO K., POUTANEN K.: "Effects of enzymes in fibre-enriched baking" JOURNAL OF THE SCIENCE OF FOOD AND AGRICULTURE, vol. 76, 1998, pages 239-249, XP002443665 cited in the application
- EMINE DENLI, RECAI ERCAN: "Effect of added pentosans isolated from wheat and rye grain on some properties of bread" EUROPEAN FOOD RESEARCH AND TECHNOLOGY, vol. 212, no. 3, 2001, pages 374-376, XP008081771
- WANG M., OUDGENOEG G., VAN VLIET T., HAMER R.: "Interaction of water unextracatble solids with gluten protein: effect on dough properties and gluten quality" JOURNAL OF CEREAL SCIENCE, vol. 38, 2003, pages 95-104, XP002443667

## Description

### TECHNICAL FIELD OF THE INVENTIONS

The present invention provides a flour based dough product of improved quality, comprising water-unextractable arabinoxylans and xylanase, and a process for its preparation. More particularly, the present invention is concerned with improving the quality of dough or the volume of baked dough products by incorporating into said dough a source of water-unextractable arabinoxylans and xylanase.

### BACKGROUND OF THE INVENTION

The quality of flour based dough and of baked flour based products is strongly influenced by the gluten contained therein. Gluten is contained in wheat and other cereals that are made into flour. Viewed alone, gluten is a tough, elastic, grayish substance resembling chewing gum.

When a flour based dough is kneaded and proofed, the gluten in the flour helps to trap the gas bubbles formed by the leavening agent (e.g. yeast or baking soda). Gas contained within a dough or batter helps a bread or other baked good rise, creating a light structure. Flours contain gluten in varying amounts. Bread (or hard wheat) flour has a relatively high gluten content (10-13 wt.%) and is therefore good for yeast breads, which require an elastic framework. On the other hand, low-protein (and therefore low-gluten) cake flour has a softer, less elastic quality and is better suited for cakes.

During dough preparation and subsequent baking, gluten forms a polymeric network that plays a pivotal role in determining the quality of flour based dough and baked dough products. The properties of this polymeric network are strongly affected by the flour composition and process parameters. As regards the flour composition, it is known that arabinoxylans (also called pentosans or hemicelluloses) influence the formation and the characteristics of the gluten network.

Arabinoxylans typically consist of α-L-arabinofuranose residues attached as branch-points to β-(1→4)-linked D-xylopyranose polymeric backbone chains. These may be 2- or 3-substituted or 2- and 3- di-substituted. In wheat flour, the distribution of the type of substitution is not random (contiguous similarly substituted residues being preferred due to the enzymatic mechanism) but the distribution of substituted (irrespective of the substitution type) residues along the chain appears random. The arabinose residues may also be linked to other groups attached such as glucuronic acid residues and ferulic acid cross-links. Arabinoxylans generally consist of between 1500-5000 residues.

Arabinoxylans interfere with gluten formation in two ways, an indirect and a direct way. The direct effect is related to an interaction between arabinoxylans and gluten. The indirect effect is related to water availability. Arabinoxylans take approximately 10 times their own weight of water and consequently have a major effect on the water distribution and viscosity of the dough. Thus, the approximate distribution of water in a typical wheat bread dough is 50% through starch, 25% through protein and 25% through arabinoxylans.

Arabinoxylans are usually divided into water extractable (WE) arabinoxylans and water unextractable (WU) arabinoxylan. WE arabinoxylans have a beneficial effect, which has been attributed to their contribution to gas retention of the dough. Carbon dioxide produced within the dough by a leavening agent dissolves in the aqueous phase and then diffuses into gas cells formed by the gluten structure. WE arabinoxylans interact with the gluten proteins to give a macromolecular complex that inhibits carbon dioxide diffusion out of the dough, which would result in the collapse of proof volume

WU arabinoxylans are detrimental to dough quality and the quality of baked goods. Due to their high water absorption properties WU arabinoxylans swell, form large agglomerates and so disrupt the continuity of the complex gluten films, which surround gas cells.

GB 1, 332,903 describes the use of water-insoluble pentosans for promoting panification. It is observed in the British patent that the volume of a portion of bread made from soft wheat can be increased significantly by substitution of 1 wt.% or 2 wt.% of the flour by water-insoluble rye pentosan.

JP-A 02076531 describes a method that enables the smooth production of bread of good quality and big volume regardless of fermentation time, said method comprising the addition the flour of 0.1-2.0% based on flour of water-soluble arabinoxylan and 10-150 ppm of a substance selected from L-ascorbic acid, dehydroascorbic acid or their salts.

JP-A 2004208559 describes a method for improving the quality of bread made with wheat flour containing high levels of pentosans, said method comprising the addition of an enzyme preparation containing hemicellulase to said wheat flour having a water content of 13.5% and containing 1.2 wt.% of pentosan.

Larukiainen et al. (Effects of enzymes in fibre-enriched baking, J Sci Food Agric 1998, 76, 239-249) describe the results of a study in which rye bran and various sources of xylanase activity were added to high fibre bread. Rye bran was applied in an amount of 5.3% by weight of flour. From Table 1 on page 241 of D1 it can be deduced that rye bran contains about 13.3% of insoluble pentosans by weight of dry matter. The authors conclude that incorporation of enzymes reduced the total dietary fibre content of the breads, but at least doubled the amount of soluble pentosan.

Uysal et al, (Effect of dietary fibre and xylanase enzyme addition on the selected properties of wire-cut cookies, Journal of Food Engineering 2007, 78, 1074-1078) describe the results of a study in which 0-30% of the wheat flour in wire-cut cookies was replaced by fibres from apple, lemon, wheat fibre and wheat bran and in which the effect of the addition of 0.4% xylanase was investigated. Wheat fibre and wheat bran contain small quantities of arabinoglucans (<< 20% by weight of dry matter).

US 2006/008567 describes a low-carbohydrate, high-fiber dough additive comprising: wheat gluten, insoluble fiber and a dough condition comprising an oxidizer and a mix reducer. The dough additive typically contains 30-40 wt.% of insoluble fiber, e.g. oat fiber. The dough additive is applied in an amount of 50-150% by weight of flour. Xylanase is mentioned as a possible component of the mix reducer.

WO 03/024231 describes a method of extending the shelf life of a dough based composition, comprising adding to said dough a shelf life extending additive composition comprising:
a. an effective amount of at least one salt of propionic, sorbic, phosphoric, citric, acetic, lactic and benzoic acid;
b. an effective amount of at least one of guar gum, Arabic gum, xanthan gum and carboxymethylcellulose; and
c. an effective amount of at least one enzyme selected from an amylase, protease and pentosanase.

Denli, E. and Ercan, R. (Effect of added pentosans isolated from wheat and rye grain on some properties of bread) describe the addition of water soluble and water insoluble pentosans extracted from wheat were added in concentration of 0.5, 1.0, 1.5, and 2.0% to flour samples with different physicochemical properties. The effects of these pentosans on the physical and technological properties of the dough and bread and bread staling were then determined. The results support the findings of previous reports which indicated that water-soluble wheat and rye pentosans could be used to increase water absorption and loaf volume and to retard bread staling.

GB 2 431 560 A describes a method of preparing a food product comprising contacting arabinoxylan with an arabinoxylan arabinofuranohydrolase. Example 1 of GB 2 431 560 A describes the preparation of a dough: the dough is prepared from whole grain wheat flour either without enzyme, with xylanase, with xylanase and alpha L arabinofuranosidase or with xylanase and arabinoxylan arabinofuranohydrolase, the dough is proofed and the amount of solubilised arabinoxylan is determined after extracting the dough with water.

### SUMMARY OF THE INVENTION

The inventors have discovered that the quality of flour based dough or of baked flour based dough products can be improved significantly by incorporating into the dough a source of WU arabinoxylans and xylanase. The inventors have found that the combined incorporation of WU arabinoxylans and xylanase yields a dough product that exhibits improved processability, excellent proof stability and very high bake volume.

Although the inventors do not wish to be bound by theory, it is believed that the benefits of the present invention are associated with in-dough formation of hydrolysates of WU arabinoxylans that have an advantageous effect on dough properties. Xylanase is capable of catalysing the hydrolysis of WU arabinoxylans and can thus stimulate the production of the aforementioned hydrolysates.

### DETAILED DESCRIPTION OF THE INVENTION

Accordingly, one aspect of the invention relates to a method of preparing a flour based dough, said method comprising mixing flour, a source of water-unextractable (WU) arabinoxylans, xylanase and water, wherein the source of WU arabinoxylans comprises at least 20% WU arabinoxylans by weight of dry matter and wherein said source of WU arabinoxylans is applied in an amount sufficient to deliver at least 2.5 g of WU arabinoxylans per kg of flour.

The term "arabinoxylans" as referred to herein refers to an α-1,3- and/or α-1,2-linked polymer of arabinose and xylose. More particularly, the term "arabinoxylans" refers to polysaccharides comprising a D-xylopyranose polymeric backbone, said backbone being 2- or 3-substituted or 2- and 3- di-substituted with α-L-arabinofuranose residues.

The term "water-extractable arabinoxylans" refers to the fraction of arabinoxylans that can readily be extracted with water having a temperature of 30 °C.

The term "water-unextractable arabinoxylans" refers to arabinoxylans that are not water-extractable arabinoxylans. Alkali is needed to extract WU arabinoxylans from e.g. flour.

The concentration of WE arabinoxylans in flour is suitably determined by thoroughly mixing 100 g of flour with 250 g of water (30 °C), followed by centrifugation at 8360 G for 10 minutes and isolation of the supernatant. The amount of arabinoxylans found in the supernatant represents the amount of WE arabinoxylans in the original flour sample. The arabinoxylans in the sediment represent the WU arabinoxylans. The arabinoxylan content is suitably analysed by means of method L00.00-18 (Bestimmung der Balaststoffe in Lebenmitteln) published in the German Food and Feed Law (§64 Abs. 1 Lebensmittel- Bedarfsgegenstände- und Futtermittelgesetzbuch) .

The term "xylanase" as used herein refers to an enzyme preparation comprising at least 100 units of xylanase activity per gram. Here one unit of xylanase activity corresponds to that enzyme activity which releases from xylan a quantity of reducing sugars equivalent to 1 µMol xylose/min. under standard conditions (30°C for 15 min at pH 4.5). The amount of reducing sugars that is released is determined using the methodology developed by Somogyi-Nelson and described by Uhlig, Helmut: Enzyme arbeiten für uns. Technische Enzyme und ihre Anwendung. Carl Hanser-Verlag, Munich, Vienna, 1991.

According to a preferred embodiment, the present method employ a source of WU arabinoxylans containing at least 25% and even preferably at least 30% WU arabinoxylans by weight of dry matter. Most preferably, the source of WU arabinoxylans contains at least 35% WU arabinoxylans by weight of dry matter.

In principle, the source of WU arabinoxylans employed in accordance with the present invention may take any shape or form. Thus, for instance, the source of WU arabinoxylans may be a powder, a paste or a liquid. Most preferably, the source of WU arabinoxylans is a powder.

The source of WU arabinoxylans employed in accordance with the present invention is advantageously isolated from a cereal material. Even more preferably, the source of WU arabinoxylans is derived from a raw material selected from the group consisting of wheat, rye, rice, oat, barley or corn and combinations thereof. Of the aforementioned cereals, wheat, rye and oat are particularly preferred. Most preferably the source of WU arabinoxylans is derived from wheat.

According to another particularly preferred embodiment, the source of WU arabinoxylans is a flour fraction; especially a flour fraction containing reduced levels of gluten and starch. Typically, the source of WU arabinoxylans contains less than 5 wt.% of gluten and less than 25 wt.% of starch.

The benefits of the present in invention are particularly pronounced in (baked) dough products based on high protein flour. Accordingly, in a preferred embodiment of the present method the dough contains at least 90 g of gluten per kg of flour, most preferably 100 - 130 g of gluten per kg of flour.

To achieve the benefits of the present invention it is advisable to adjust the amount of WU arabinoxylans in the dough to the amount gluten contained therein. Accordingly, in accordance with an advantageous embodiment, the dough contains WU arabinoxylans and gluten in a weight ratio of 1:2 to 1:8, preferably of 1:4 to 1:6.

The amount of the source of WU arabinoxylans that is applied in the flour based dough preferably is at least 10 g, more preferably at least 25 g per kg of flour. The optimum dosage level depends, amongst other things, on the amount of arabinoxylans naturally present in the flour as well as on the gluten content of the flour.

In accordance with the present invention sufficient xylanase activity should be provided in the dough to ensure that adequate hydrolysis of the WU arabinoxylans is achieved. Preferably, xylanase is applied in an amount sufficient to deliver at least 5 units, more preferably at least 10 units, and even more preferably at least 30 units of xylanase activity per kg of flour. Most preferably xylanase is applied in an amount sufficient to deliver at least 50 units of xylanase activity per kg of flour.

Expressed differently, xylanase is advantageously applied in an amount sufficient to deliver at least 2 units, preferably at least 5 units of xylanase activity per g of WU arabinoxylans.

The xylanase employed in accordance with the present invention preferably is an enzyme preparation exhibiting a high level of xylanase activity, e.g. least 1,000 units of xylanase activity per gram. Most preferably, the xylanase employed in the present method has a xylanase activity of at least 10,000 units per gram.

Different types of xylanases can be employed in accordance with the present invention, provided they are capable of hydrolysing the WU arabinoxylans contained in the dough. According to a particularly preferred embodiment, the xylanase is an endoxylanase.

The source of WU arabinoxylans employed in the present method, besides WU arabinoxylans may also contain WE arabinoxylans. Preferably, however, the source of WU arabinoxylans is significantly enriched in WU arabinoxylans relative to WE arabinoxylans. Accordingly, in a preferred embodiment, the source of WU arabinoxylans contains WU arabinoxylans and water extractable (WE) arabinoxylans in a weight ratio of at least 2.5:1, more preferably in a weight ratio of at least 3:1 and most preferably in a weight ration of at least 4:1. Naturally, these embodiments also encompass sources of WU arabinoxylans in which WE arabinoxylans are completely absent.

In order to achieve the full benefits of the present invention dough recipe and dough processing conditions should be optimised so as to ensure that a significant fraction of the arabinoxylans is hydrolysed by the xylanase. At the same time, is should be ensured that the hydrolysis of the arabinoxylans does not proceed to a level where the beneficial effect of the hydrolysate components is lost. Accordingly, a preferred embodiment of the present method comprises the additional step of baking the dough to produce a baked product, wherein after the mixing of flour, a source of WU arabinoxylan, xylanase and water, and prior to baking, the dough is kept at a temperature in the range of 15-45 °C, preferably in the range of 20-40 °C, for 20-480 minutes. Most preferably, the dough is kept at the aforementioned temperature for 40-120 minutes.

Another aspect of the present invention relates to the use of a source of WU arabinoxylans comprising at least 20% of WU arabinoxylans by weight of dry matter to improve the quality of dough or the volume of baked dough, said use comprising incorporating the source of WU arabinoxylans in a dough in an amount sufficient to deliver at least 2.5 g WU arabinoxylans per kg of flour, wherein said dough exhibits at least 10 units of xylanase activity per kg of flour.

Examples of quality aspects of the dough that can be significantly improved by the aforementioned use include dough processability and dough stability after proofing. As regards baked dough products, the present use offers the advantage that the volume increase observed during baking can be increased quite dramatically.

Yet another aspect of the invention relates to a flour based dough containing:
- 30-65 wt.% of flour of which at least 80 wt.% is wheat flour;
- 20-65 wt.% of water;
- at least 2.25 %, preferably at least 2.5 % of WU arabinoxylans by weight of flour; and
- at least 5 units, preferably at least 10 units, more preferably at least 30 units of xylanase activity per kg of flour,
wherein the weight ratio of WU arabinoxylans to WE arabinoxylans exceeds 2.5:1.

The flour based dough according to the present invention differs from ordinary flour based doughs containing added xylanase in that the weight ratio of WU arabinoxylans to WE arabinoxylans is significantly higher as a result of the addition of WU arabinoxylans. The flour in dough according to the present invention contains at least 80 wt.% of wheat flour. Wheat flour contains minor amounts of WU arabinoxylans. Other flour, such as rye flour, may contain significant levels of WU arabinoxylans (e.g. up to 6% by weight of flour). However, the use of flours other than wheat flour in the dough of the present invention is limited to not more than 20wt.% of total flour. According to a particularly preferred embodiment of the invention, the flour contained in the dough comprises at least 90 wt.% of wheat flour, most preferably at least 95 wt.% of wheat flour.

The flour employed in the flour based dough may suitably be obtained from a variety of cereal sources, such as wheat, rye, barley.

WE arabinoxylans can have a favourable influence on dough quality. The present invention, however, makes it possible to prepare a good quality dough even if the dough contains only a limited amount of WE arabinoxylans. Hence, according to a preferred embodiment, the dough as defined herein before contains less than 1% WE arabinoxylans by weight of flour.

As explained herein before, the benefits of the invention are particularly pronounced in doughs that contain high levels of gluten. Accordingly, in an advantageous embodiment, the dough contains at least 90 g, more preferably 100-130 g of gluten per kg of flour.

Other advantageous embodiments of the flour based dough according the present invention have been described herein before and relate, for instance, to the weight ratio of WU arabinoxylans and gluten and the weight ratio of WU arabinoxylans to WE arabinoxylans within the dough.

The invention is further illustrated by the following examples.

### EXAMPLES

### Example 1

### Preparation of wheat flour isolate containing high level of WU arabinoxylans

A wheat flour isolate containing 92 wt.% of WU arabinoxylans was prepared from process water from wheat starch production. The pH of the process water was adjusted to pH 3.6 in order to precipitate protein. After removal of the protein precipitate the remaining supernatant was repeatedly extracted with ethanol. The ethanol extracts were combined and freeze dried.

### Example 2

### Application of WU arabinoxylans and xylanase in German rolls

The effect of the combined addition of WU arabinoxylans and xylanase in German rolls was evaluated by preparing dough containing the wheat flour isolate of Example 1 and added xylanase in accordance with the recipes described in Table 1. Reference samples were included in order to make it possible to assess the combined effect of the addition of xylanase and WU arabinoxylans.

**Table 1**

| | Ref. 1 | Ref. 2 | A | B |
|---|---|---|---|---|
| Wheat flour | 7,000 g | 6,962 g | 6,962 g | 6,962 g |
| Water | 3,990 g | 3,990 g | 3,990 g | 3,990 g |
| Yeast | 280 g | 280 g | 280 g | 280 g |
| Salt | 140 g | 140 g | 140 g | 140 g |
| Ascorbic acid | 140 mg | 140 mg | 140 mg | 140 mg |
| DATEM | 4 g | 4 g | 4 g | 4 g |
| Dextrose | 2.9 g | 2.9 g | 2.9 g | 2.9 g |
| Isolate of Example 1 | | 38 g | 38 g | 38 g |
| Endoxylanase ^{#} | 100 units ^{$} | | 100 units | 135 units |

| | | | | |
|---|---|---|---|---|
| ^{#} Veron™ 191 from AB Enzymes ^{$} Units of enzyme activity per kg of flour | | | | |

The rolls were prepared by admixing the dough ingredients in a Spiral mixer and kneading for 4 (slow) + 6 (fast) minutes (temperature: 25 °C). Next, the dough was allowed to rest for 20 minutes before it was divided in shaped pieces of about 60 grams. Subsequently, the dough pieces were proofed at 33 °C and a relative humidity of 85.% for 50 minutes. After proofing the dough pieces were transferred into a preheated oven and baked for 18 minutes at 260 °C.

The properties of the dough as well as of the baked rolls were evaluated by an expert panel. The conclusions of the expert panel are summarised in Table 2.

**Table 2**

| | Ref. 1 | Ref. 2 | A | B |
|---|---|---|---|---|
| Dough properties | | | | |
| - after kneading | a bit moist | somewhat moist, soft | good, dry expandable, | good, dry expandable, |
| - after resting | a bit moist | A bit soft | dry | dry |
| - proofing stability | a bit instable | too instable | stable | stable |
| | | | | |

| Bread properties | | | | |
|---|---|---|---|---|
| - volume | 100% | 88% | 110% | 113% |
| - cut | a bit irregular | irregular, too week | good | good |
| | | | | |

| Crumb properties | | | | |
|---|---|---|---|---|
| - structure | a bit irregular | irregular | a bit irregular | a bit irregular |
| - softness | good | compact | good | good |
| - elasticity | good | good | good | good |

These findings show that the combined use of WU arabinoxylans and xylanase improves dough quality, bread volume and crumb properties.

### Example 3

### Application of WU arabinoxylans and xylanase in tin bread

The effect of the combined addition of WU arabinoxylans and xylanase in white tin bread was evaluated by preparing dough containing the wheat flour isolate of Example 1 and added xylanase in accordance with the recipes described in Table 3.

**Table 3**

| | Ref. | A | B | C | D |
|---|---|---|---|---|---|
| Wheat flour | 4,000 g | 3,989 g | 3,978 g | 3,957 g | 3,935 g |
| Water | 2,320 g | 2,320 g | 2,320 g | 2,320 g | 2,320 g |
| Yeast | 200 g | 200 g | 200 g | 200 g | 200 g |
| Salt | 80 g | 80 g | 80 g | 80 g | 80 g |
| Ascorbic acid | 330 mg | 330 mg | 330 mg | 330 mg | 330 mg |
| Isolate of Example 1 | | 11 g | 22 g | 43 g | 65 g |
| Endoxylanase ^{#} | 75 units | 75 units | 75 units | 75 units | 75 units |

| | | | | | |
|---|---|---|---|---|---|
| ^{#} Veron™ 191, ex AB Enzymes | | | | | |

The tin bread was prepared by admixing the dough ingredients in a Spiral mixer and kneading for 2 (slow) + 4 (fast) minutes (temperature: 26 °C). Next, the dough was allowed to rest for 15 minutes before it was divided in pieces of about 600 grams. Subsequently, the dough pieces were transferred into the tins and proofed at 33 °C and a relative humidity of 85 % for 45 minutes. After proofing the dough pieces were transferred into a preheated oven and baked for 35 minutes at 230°C.

The properties of the dough as well as of the baked bread were evaluated by an expert panel. The results are depicted in Table 4.

**Table 4**

| | Ref. 1 | A | B | C | D |
|---|---|---|---|---|---|
| Dough properties | | | | | |
| - after kneading | moist, soft | a bit moist, normal | good | good, firm | good, very firm |
| - after resting | slightly moist, soft | a it moist, normal | good | good, a bit firm | good, firm |
| - proofing stability | unstable | a bit unstable | good | very stable | good |
| | | | | | |

| Bread properties | | | | | |
|---|---|---|---|---|---|
| - volume | 100% | 103% | 106% | 108% | 112% |
| | | | | | |

| Crumb properties | | | | | |
|---|---|---|---|---|---|
| - structure | irregular | irregular | irregular | regular | regular |
| - softness | good | good | good | good | good |
| - elasticity | satisfactory | satisfactory | satisfactory | good | good |

### Example 4

### Application of WU arabinoxylans and xylanase in baguette

The effect of the combined addition of WU arabinoxylans and xylanase in baguette was evaluated by preparing dough containing the wheat flour isolate of Example 1 and added xylanase in accordance with the recipes described in Table 5.

**Table 5**

| | Ref. | A | B | C | D |
|---|---|---|---|---|---|
| Wheat flour | 4,000 g | 3,989 g | 3,978 g | 3,957 g | 3,935 g |
| Water | 2,400 g | 2,400 g | 2,400 g | 2,400 g | 2,400 g |
| Yeast | 100 g | 100 g | 100 g | 100 g | 100 g |
| Salt | 80 g | 80 g | 80 g | 80 g | 80 g |
| Ascorbic acid | 66 mg | 66 mg | 66 mg | 66 mg | 66 mg |
| DATEM | 1.65 g | 1.65 g | 1.65 g | 1.65 g | 1.65 g |
| Isolate of Example 1 | | 11 g | 22 g | 43 g | 65 g |
| Endoxylanase ^{#} | 85 units | 85 units | 85 units | 85 units | 85 units |

| | | | | | |
|---|---|---|---|---|---|
| ^{#} Veron™ 191, ex AB Enzymes | | | | | |

The baguettes were prepared by admixing the dough ingredients in a Spiral mixer and kneading for 6 (slow) + 4 (fast) minutes (temperature: 26.5 °C). Next, the dough was allowed to rest for 20 minutes before it was divided in shaped pieces of about 350 grams. Subsequently, the dough pieces were proofed at 33 °C and a relative humidity of 85 % for 1 hour. After proofing the dough pieces were transferred into a preheated oven and baked for 27 minutes at 240°C.

The properties of the dough as well as of the baked bread were evaluated by an expert panel. The results are depicted in Table 6.

**Table 6**

| | Ref. 1 | A | B | C | D |
|---|---|---|---|---|---|
| Dough properties | | | | | |
| - after kneading | a bit moist and soft | normal | good | good | good, a bit firm |
| - after resting | a bit soft | a bit soft | good | good | good, a bit firm |
| - proofing stability | Acceptable | more stable | more stable | more stable | very stable |
| | | | | | |

| Bread properties | | | | | |
|---|---|---|---|---|---|
| - volume | 100% | 107% | 109% | 110% | 106% |
| - cut | irregular, weak | more regular | more regular | more regular | more regular |
| | | | | | |

| Crumb properties | | | | | |
|---|---|---|---|---|---|
| - structure | Irregular | good | good | good | Good |
| - softness | Compact | more soft | more soft | more soft | more soft |
| - elasticity | Good | good | good | good | Good |

### Example 5

Example 2 was repeated except that this time also other types of xylanase were used to deliver the xylanase activity. The xylanases that were tested, in addition to the Veron™ 191, are listed in Table 7:

**Table 7**

| Product | microorganisms | type of xylanases | Supplier |
|---|---|---|---|
| Biobake™ Optum 500 | *Aspergillus spp.* | endo + exo-xylanases | Kerry Bioscience |
| Nutrilife™ CCX 06 | *Trichoderma spp.* | Endo + exo-xylanases | Cognis |
| Biobake™ Silk | *Trichoderma spp.* | Endo + exo-xylanases | Kerry Bioscience |
| Veron™ Special | *Bacillus subtilis* | Endo-xylanases | AB Enzymes |
| TP 751P | *Bacillus subtilis* | Endo-xylanases | Biocatalyst Ltd. |

The dough formulations that were tested are described in the following table:

**Table 8**

| | Ref. | Veron 191 | Biobake Optum 500 | Nutrilife CCX 06 | Veron Special | TP 751 P |
|---|---|---|---|---|---|---|
| Wheat flour | 7,000 g | 6,962 g | 6,962 g | 6,962 g | 6,962 g | 6,962 g |
| Water | 3,990 g | 3,990 g | 3,990 g | 3,990 g | 3,990 g | 3,990 g |
| Yeast | 280 g | 280 g | 280 g | 280 g | 280 g | 280 g |
| Salt | 140 g | 140 g | 140 g | 140 g | 140 g | 140 g |
| Ascorbic acid | 140 mg | 140 mg | 140 mg | 140 mg | 140 mg | 140 mg |
| DATEM | 4 g | 4 g | 4 g | 4 g | 4 g | 4 g |
| Dextrose | 2.9 g | 2.9 g | 2.9 g | 2.9 g | 2.9 g | 2.9 g |
| Isolate Example 1 | 38 g | 38 g | 38 g | 38 g | 38 g | 38 g |
| Xylanases | | 100 units | 100 units | 20 units | 24 units | 24 units |

The properties of the dough as well as of the baked bread were evaluated by an expert panel. The results are depicted in Table 9.

**Table 9**

| | Ref. | Veron™ 191 | Biobake ™ Optum 500 | Nutrilife™ CCX 06 | Veron ™ Special | TP 751 P |
|---|---|---|---|---|---|---|
| Dough properties | | | | | | |
| - after kneading | Some what moist, soft | good, dry expandable, | good, a bit moist, expandable | good, a bit moist, expandable, | good, dry, expandable, | good, a bit moist, expandable, |
| - after resting | a bit soft | dry | a bit moist | somewhat moist | dry | a bit moist |
| - proofing stability | too instable | stable | stable | a bit instable | stable | stable |

| Bread properties | | | | | | |
|---|---|---|---|---|---|---|
| - volume | 88% | 122% | 117% | 118% | 123% | 117% |
| - cut | irregula r, too weak | good | good | a bit weak | a bit weak | a bit weak |

| Crumb properties | | | | | | |
|---|---|---|---|---|---|---|
| - structure | irregular | a bit irregular | a bit irregular | regular, very fine | regular, fine | regular, fine |
| - softness | compact | good | good | good | good | good |
| - elasticity | good | good | good | good | good | good |

These results show that the benefits of the present invention can be realised with different types xylanases.

### Example 6

Example 2 was repeated, except that the amount fo WU arabinoxylans employed was varied from 0-1.5% by weight of flour. The dough recipes that were tested are depicted in the following table.

**Table 10**

| | Ref. | A | B | C | D | E |
|---|---|---|---|---|---|---|
| Wheat flour | 7,000 g | 6,981 g | 6,962 g | 6,943 g | 6,924 g | 6,886 g |
| Water | 3,990 g | 3,990 g | 3,990 g | 3,990 g | 3,990 g | 3,990 g |
| Yeast | 280 g | 280 g | 280 g | 280 g | 280 g | 280 g |
| Salt | 140 g | 140 g | 140 g | 140 g | 140 g | 140 g |
| Ascorbic acid | 140 mg | 140 mg | 140 mg | 140 mg | 140 mg | 140 mg |
| DATEM | 4 g | 4 g | 4 g | 4 g | 4 g | 4 g |
| Dextrose | 2.9 g | 2.9 g | 2.9 g | 2.9 g | 2.9 g | 2.9 g |
| Isolate Example 1 | | 19 g | 38 g | 57 g | 76 g | 114 g |
| Xylanase | | 100 units | 100 units | 100 units | 100 units | 100 units |

The properties of the dough as well as of the baked bread were evaluated by an expert panel. The results are depicted in Table 11.

**Table 11**

| | Ref. | A | B | C | D | E |
|---|---|---|---|---|---|---|
| Dough properties | | | | | | |
| - after kneading | somewhat moist and soft | normal | good, a bit firm | good, firm | good, firm | good, a bit too firm |
| - after resting | a bit soft | a bit soft | good, a bit firm | good, a bit firm | good, firm | good, firm |
| - proofing stability | Normal | bit more stable | more stable | more stable | more stable | much more stable |
| | | | | | | |

| Bread properties | | | | | | |
|---|---|---|---|---|---|---|
| - volume | 100% | 103% | 106% | 106% | 105% | 100% |
| - cut | bit irregular, bit weak | more regular, bit weak | more regular, bit weak | more regular and distinct | more regular and distinct | more regular and distinct |
| | | | | | | |

| Crumb properties | | | | | | |
|---|---|---|---|---|---|---|
| - structure | irregular | irregular | bit more regular | bit more regular | regular, fine | regular, bit too fine |
| - softness | compact | bit more soft | bit more soft | bit more soft | bit compact | bit too compact |
| - elasticity | good | good | good | good | good | good |

These results show that the WU arabinoxylans can advantageously be employed in combination with xylanase within a broad concentration range. It will be understood that the optimum level depends strongly on the dough ingredients used, the processing conditions employed during dough preparation and the type of xylanase that is applied.

## Claims

1. A method of preparing a flour based dough, said method comprising mixing flour, a source of water-unextractable (WU) arabinoxylans, xylanase and water, wherein the source of WU arabinoxylans comprises at least 20% WU arabinoxylans by weight of dry matter and wherein said source of WU arabinoxylans is applied in an amount sufficient to deliver at least 2.5 g of WU arabinoxylans per kg of flour.

2. Method according to claim 1, wherein the source of WU arabinoxylans comprises at least 30% WU arabinoxylans by weight of dry matter.

3. Method according to claim 1 or 2, wherein the source of WU arabinoxylans is derived from a raw material selected from the group consisting of wheat, rye, rice, oat, barley or corn and combinations thereof.

4. Method according to any one of the preceding claims, wherein the dough contains at least 90 g of gluten per kg of flour.

5. Method according to claim 4, wherein the dough contains WU arabinoxylans and gluten in a weight ratio of 1:4 to 1:6

6. Method according to any one of the preceding claims, wherein the source of WU arabinoxylans is applied in an amount of at least 10 g, preferably at least 25 g per kg of flour.

7. Method according to any one of the preceding claims, wherein xylanase is applied in an amount sufficient to deliver at least 5 units, preferably at least 10 units of xylanase activity per kg of flour.

8. Method according to any one of the preceding claims, wherein the source of WU arabinoxylans contains WU arabinoxylans and water extractable (WE) arabinoxylans in a weight ratio of at least 2.5:1, preferably in a weight ratio of at least 3:1.

9. Use of a source of WU arabinoxylans comprising at least 20% of WU arabinoxylans by weight of dry matter to improve the quality of dough or the volume of baked dough, said use comprising incorporating the source of WU arabinoxylans in a dough in an amount sufficient to deliver at least 2.5 g WU arabinoxylans per kg of flour, wherein said dough exhibits at least 10 units of xylanase activity per kg of flour.

10. A flour based dough containing:
• 30-65 wt.% of flour of which at least 80 wt.% is wheat flour;
• 20-65 wt.% of water;
• at least 2.25%, preferably at least 2.5% of WU arabinoxylans by weight of flour; and
• at least 5 units, preferably at least 10 units of xylanase activity per kg of flour,
wherein the weight ratio of WU arabinoxylans to WE arabinoxylans exceeds 2.5:1.

11. Flour based dough according to claim 10, wherein the dough contains from 100-130 g of gluten per kg of flour.

12. Flour based dough according to claim 9 or 10, wherein the dough contains WU arabinoxylans and gluten in a weight ratio of 1:2 to 1:8.

## Patentansprüche

1. Verfahren zur Herstellung eines Teigs auf Mehlbasis, wobei das Verfahren das Vermischen von Mehl, einer Quelle von wasser-unextrahierbaren (WU) Arabinoxylanen, Xylanase und Wasser umfasst, wobei die Quelle von WU-Arabinoxylanen mindestens 20% WU- Arabinoxylane als Trockenmassegewicht umfasst, und wobei die Quelle von WU-Arabinoxylanen in einer ausreichenden Menge angewandt wird, um mindestens 2,5 g an WU-Arabinoxylanen pro kg Mehl vorzusehen.

2. Verfahren nach Anspruch 1, wobei die Quelle von WU-Arabinoxylanen mindestens 30% WU-Arabinoxylane als Trockenmassegewicht umfasst.

3. Verfahren nach Anspruch 1 oder 2, wobei die Quelle an WU-Arabinoxylanen aus einem Rohmaterial abgeleitet ist, gewählt aus der Gruppe, bestehend aus Weizen, Roggen, Reis, Hafer, Gerste oder Mais und Kombinationen hiervon.

4. Verfahren nach irgendeinem der vorangehenden Ansprüche, wobei der Teig mindestens 90 g Gluten pro kg Mehl enthält.

5. Verfahren nach Anspruch 4, wobei der Teig WU-Arabinoxylane und Gluten in einem Gewichtsverhältnis von 1:4 bis 1:6 enthält.

6. Verfahren nach irgendeinem der vorangehenden Ansprüche, wobei die Quelle von WU-Arabinoxylanen in einer Menge von mindestens 10 g, vorzugsweise mindestens 25 g, pro kg Mehl angewandt wird.

7. Verfahren nach irgendeinem der vorangehenden Ansprüche, wobei Xylanase in einer ausreichenden Menge angewandt wird, um mindestens 5 Einheiten, vorzugsweise mindestens 10 Einheiten, an Xylanaseaktivität pro kg Mehl vorzusehen.

8. Verfahren nach irgendeinem der vorangehenden Ansprüche, wobei die Quelle von WU-Arabinoxylanen WU-Arabinoxylane und wasser-extrahierbare (WE) Arabinoxylane in einem Gewichtsverhältnis von mindestens 2,5:1, vorzugsweise in einem Gewichtsverhältnis von mindestens 3:1, enthält.

9. Verwendung einer Quelle von WU-Arabinoxylanen, umfassend mindestens 20% WU-Arabinoxylane als Trockenmassegewicht, zur Verbesserung der Qualität von Teig oder des Volumens von gebackenem Teig, wobei die Verwendung die Einbringung der Quelle von WU-Arabinoxylanen in einen Teig in einer ausreichenden Menge, um mindestens 2,5 g WU-Arabinoxylane pro kg Mehl vorzusehen, umfasst, wobei der Teig mindestens 10 Einheiten an Xylanaseaktivität pro kg Mehl aufweist.

10. Teig auf Mehlbasis, enthaltend:
• 30-65 Gew.-% Mehl, von dem mindestens 80 Gew.-% Weizenmehl sind;
• 20-65 Gew.-% Wasser;
• mindestens 2,25%, vorzugsweise mindestens 2,5% WU-Arabinoxylane, bezogen auf Mehlgewicht;
• mindestens 5 Einheiten, vorzugsweise mindestens 10 Einheiten an Xylanaseaktivität pro kg Mehl,
wobei das Gewichtsverhältnis von WU-Arabinoxylanen zu WE-Arabinoxylanen 2,5:1 überschreitet.

11. Teig auf Mehlbasis nach Anspruch 10, wobei der Teig 100-130 g Gluten pro kg Mehl enthält.

12. Teig auf Mehlbasis nach Anspruch 9 oder 10, wobei der Teig WU-Arabinoxylane und Gluten in einem Gewichtsverhältnis von 1:2 bis 1:8 enthält.

## Revendications

1. Méthode de préparation d'une pâte à base de farine, ladite méthode consistant à mélanger de la farine, une source d'arabinoxylanes non extractibles à l'eau (WU), de la xylanase et de l'eau, dans laquelle la source d'arabinoxylanes WU comprend au moins 20 % d'arabinoxylanes en poids de matière sèche et dans laquelle ladite source d'arabinoxylanes WU est appliquée selon une quantité suffisante pour délivrer au moins 2,5 g d'arabinoxylanes WU par kg de farine.

2. Méthode selon la revendication 1, dans laquelle la source d'arabinoxylanes WU comprend au moins 30 % d'arabinoxylanes WU en poids de matière sèche.

3. Méthode selon la revendication 1 ou 2, dans laquelle la source d'arabinoxylanes WU est dérivée d'une matière première choisie parmi le groupe constitué de blé, seigle, riz, avoine, orge ou maïs et des combinaisons de ceux-ci.

4. Méthode selon l'une quelconque des revendications précédentes, dans laquelle la pâte contient au moins 90 g de gluten par kg de farine.

5. Méthode selon la revendication 4, dans laquelle la pâte contient des arabinoxylanes WU et du gluten selon un rapport en poids de 1:4 à 1:6.

6. Méthode selon l'une quelconque des revendications précédentes, dans laquelle la source d'arabinoxylanes WU est appliquée selon une quantité d'au moins 10 g, de préférence d'au moins 25 g par kg de farine.

7. Méthode selon l'une quelconque des revendications précédentes, dans laquelle la xylanase est appliquée selon une quantité suffisante pour délivrer au moins 5 unités, de préférence au moins 10 unités d'activité xylanase par kg de farine.

8. Méthode selon l'une quelconque des revendications précédentes, dans laquelle la source d'arabinoxylanes WU contient des arabinoxylanes WU et des arabinoxylanes extractibles à l'eau (WE) selon un rapport en poids d'au moins 2,5:1, de préférence selon un rapport en poids d'au moins 3:1.

9. Utilisation d'une source d'arabinoxylanes WU comprenant au moins 20 % d'arabinoxylanes WU en poids de matière sèche pour améliorer la qualité d'une pâte ou le volume d'une pâte cuite, ladite utilisation comprenant l'incorporation de la source d'arabinoxylanes WU dans une pâte selon une quantité suffisante pour délivrer au moins 2,5 g d'arabinoxylanes WU par kg de farine, ladite pâte présentant au moins 10 unités d'activité xylanase par kg de farine.

10. Pâte à base de farine contenant :
• 30-65 % en poids de farine dont au moins 80 % en poids est de la farine de blé ;
• 20-65 % en poids d'eau ;
• au moins 2,25 %, de préférence au moins 2,5 % d'arabinoxylanes WU en poids de farine ; et
• au moins 5 unités, de préférence au moins 10 unités d'activité xylanase par kg de farine,
dans laquelle le rapport en poids entre des arabinoxylanes WU et des arabinoxylanes WE dépasse 2,5:1.

11. Pâte à base de farine selon la revendication 10, dans laquelle la pâte contient de 100 à 130 g de gluten par kg de farine.

12. Pâte à base de farine selon la revendication 9 ou 10, dans laquelle la pâte contient des arabinoxylanes WU et du gluten selon un rapport en poids de 1:2 à 1:8.
